# EUROPEAN PATENT SPECIFICATION

(11) **EP 2 788 121 B1**
(45) Date of publication and mention of the grant of the patent: **15.06.2016**
(21) Application number: 12815808.6
(22) Date of filing: 07.12.2012
(51) Int. Cl.: B04C 5/16, C02F 1/38, B01D 19/00, C02F 1/20

(54) **DEAERATION APPARATUS AND METHOD**
ENTLÜFTUNGSVORRICHTUNG UND VERFAHREN
APPAREIL ET PROCÉDÉ DE DÉSAÉRATION

(30) Priority: 09.12.2011 AU 2011905131
(43) Date of publication of application: 15.10.2014
(73) Proprietor: Outotec OYJ, 02230 Espoo (FI)
(72) Inventor: ARBUTHNOT, Ian, Bicton, Western Australia 6157 (AU); HEATH, Alex, West Perth, Western Australia 6005 (AU)
(74) Representative: K & H Bonapat
(86) International application number: PCT/IB2012/057051
(87) International publication number: WO 2013/024468

(56) References cited:
- EP-A1- 0 307 965
- EP-A1- 0 452 181
- EP-A1- 1 297 875
- DE-A1- 2 727 398
- DE-C- 465 486

## Description

### Field of the Invention

The present invention relates to deaerating fluids, and in particular, to an apparatus and method for deaerating or separating entrained air or froth from liquid suspensions or pulps. The present invention also relates to dissipating kinetic energy from fluids, including liquid suspensions or pulps, prior to feeding the fluid into a separation device. The invention has been developed primarily for use in thickeners, clarifiers, concentrators and other separation devices, and will be described hereinafter with reference to this application. However, it will be appreciated that the invention is not limited to this particular field of use.

### Background of the Invention

The following discussion of the prior art is intended to present the invention in an appropriate technical context and allow its significance to be properly appreciated. Unless clearly indicated to the contrary, however, reference to any prior art in the specification should not be construed as an admission that such art is widely known or forms part of the common knowledge in the field.

Thickeners, clarifiers, concentrators and other separators are typically used for separating solids from liquids and are often found in the mining, mineral processing, food processing, sugar refining, water treatment, sewerage treatment and other such industries. These devices typically comprise a tank in which solvents are deposited from the suspension or solution and settled toward the bottom as pulp or sludge to be drawn off from below and recovered. A dilute liquor of low relative density is thereby displaced toward the top of the tank, for removal via an overflow launder.

The liquid to be thickened, typically called a "feed slurry" or "feed liquid", is initially fed through a horizontal feed pipe or feed line into a feedwell disposed within the main tank of the thickener. The purpose of the feedwell is to ensure relatively uniform distribution and to prevent turbulence from the incoming feed liquid from disturbing the settling process taking place within the surrounding tank.

The feed slurry passing through the feed pipe has a nominal flow velocity that is usually calculated to be in the range 1.5 to 1.8 m/s. At this velocity, the feed slurry, when it enters the feedwell of the thickener, has the right amount of energy to promote mixing of the feed slurry stream with added flocculant, while not being too turbulent. Excess turbulence has undesirable consequences as it leaves the bottom of the feedwell, as this disturbs the settling process in the main tank of the thickener.

In practice, however, in many plant situations, the upstream piping delivering the feed slurry runs into the feed pipe from a higher point. This causes the feed slurry to increase in flow velocity and at the same time entrains air, such that there is an aerated feed slurry flowing along the horizontal feed pipe at a velocity of up to 5 times the desired velocity referred to in paragraph [0005]. As this high velocity feed slurry stream enters the feedwell, it creates a large amount of turbulence that can disturb the settling process in the thickener. In addition, the entrained air is released from the slurry and creates froth that can be transported into the main tank of the thickener. This has undesirable results in reducing the separation efficiency of the thickener by causing slower settling rates and lowering underflow densities through the froth becoming trapped in the sludge.

The froth also contaminates the dilute liquor, which is generally recycled as process water for the plant. A further problem is that the froth leaves solid particulates in the overflow and these particulates eventually deposit in storage tanks or dams, which consequently must be frequently cleaned to remove accumulated sedimentation and contaminants. This increases plant costs and the additional maintenance of storage tanks or dams, and removal of solid particulates from the processed water. The entrained air, as it is released, can also cause the feed slurry stream to wash over the sides of the feedwell.

It has been the practice on some thickeners to attempt to mitigate this undesirable high velocity mixture of aerated feed slurry by directing it into a "break tank". That is, a tank in which the feed slurry stream can be collected and release some of its energy and air, before exiting into the thickener feed pipe or conduit. While the use of a break tank is usually at least partly effective, there are a number of problems that arise in the design of such tanks.

Another solution has been to provide a break tank with a vertical baffle plate separating the tank into an upstream chamber and a downstream chamber. A gap between the lower end of the baffle plate and the bottom of the break tank allows the feed slurry to flow into the downstream chamber. The vertical baffle plate dissipates the energy in the feed slurry as it moves from the upstream chamber to the downstream chamber. While this solution addresses the problem of turbulence in the feed slurry, it does not address the problems of entrained air in the feed slurry. To this end, documents DE 27 27 398 and EP 1 297 875 do disclose an apparatus and a method for deaerating a feed fluid comprising a chamber for separating a feed fluid introduced by a tangential inlet into a first component comprising froth or gas and a second component substantially comprising deaerated liquid or sludge. A rotational flow of the feed fluid in the separating chamber is generated such that the flow creates a centrifugal vortex to separate the feed fluid into said first component and said second component.

It is an object of the present invention to overcome or ameliorate at least one of the disadvantages of the prior art, or to provide a useful alternative.

### Summary of the invention

According to a first aspect of the invention, there is provided an apparatus for deaerating a feed fluid, the apparatus comprising a chamber for separating said feed fluid into a first component substantially comprising froth or gas and a second component substantially comprising deaerated liquid or sludge, an opening for fluid flow from said separating chamber and a device for restricting fluid flow through said opening, said flow restricting device comprising a valve mounted to a movable shaft for moving said valve, wherein said opening and said flow restricting device induce a rotational flow of said feed fluid in said separating chamber such that said rotational flow generates a centrifugal vortex to separate said feed fluid into said first component and said second component.

Unless the context clearly requires otherwise, throughout the description and the claims, the words "comprise", "comprising", and the like are to be construed in an inclusive sense as opposed to an exclusive or exhaustive sense; that is to say, in the sense of "including, but not limited to".

The movable shaft preferably moves the valve relative to said opening. It is further preferred that said movable shaft moves said valve along the rotational axis of said centrifugal vortex. In one particularly preferred form, said flow restricting device comprises a dart valve.

Preferably, the size of said opening is adjustable to restrict the flow of said second component through the opening. Alternatively, the apparatus comprises a device for adjusting the size of said opening. In one preferred form, the size adjusting device comprises a plurality of moveable plates for adjusting the size of said opening. In a particularly preferred form, the movable plates act like an iris to adjust the size of said opening.

Preferably, the flow restricting device also controls the location of the vortex in said separating chamber. Preferably, the flow restricting device controls a start point of the vortex. In other words, its lowest point. Preferably, the flow restricting device axially displaces a start point of the centrifugal vortex from the opening. Preferably, the flow restricting device is movable to movably locate the centrifugal vortex.

Preferably, the flow restricting device also controls the flow of said second component through the opening. More preferably, the flow restricting device is movable to adjust the flow of said second component through the opening in response to changes in the volume of feed fluid in said separating chamber. In one preferred form, the flow restricting device is movable to adjust the flow of said second component through the opening in response to changes in the volume of feed fluid in said separating chamber.

Preferably, the opening is located in a plane substantially perpendicular to the rotational axis of the centrifugal vortex. More preferably, the opening lies in a substantially horizontal plane relative to the longitudinal axis of the tank.

Preferably, said apparatus further comprises a chamber downstream of said separating chamber for receiving said second component. More preferably, said downstream chamber is configured to dissipate kinetic energy from said second component. Preferably, the downstream chamber has a cross-section for encouraging flow of said second component through an outlet of said tank. In one preferred form, the downstream chamber has a circular or conical cross-section. In another preferred form, the downstream chamber has a curved or partly conical cross-section.

Preferably, the apparatus comprises a feed inlet for feeding said feed fluid into said separating chamber, said inlet being arranged to introduce the feed fluid tangentially to a sidewall of the separating chamber to promote said rotational flow in said separating chamber.

Preferably, the apparatus comprises an outlet for removing said second component from said downstream chamber, said outlet being arranged so that said second component discharges from the downstream chamber tangentially with respect to a sidewall of the downstream chamber.

Preferably, said downstream chamber has a volume less than the volume of said separating chamber to minimise sanding in said downstream chamber. In one preferred form, the tank tapers downwardly from said separating chamber to said downstream chamber.

Preferably, said separating chamber comprises an upper compartment of said tank and said downstream chamber comprises a lower compartment, said tank further comprising a partition for dividing said tank into said upper compartment and said lower compartment, wherein said opening is formed in said partition. In one preferred form, the partition comprises an orifice plate.

Preferably, the first component leaves the apparatus as an overflow stream. Preferably, the separating chamber comprises an outlet for the first component. In one preferred form, the outlet comprises a chimney. In another preferred form, the chimney comprises a spraying apparatus for breaking up air bubbles in the first component.

Preferably, the second component leaves the apparatus as an underflow stream. More preferably, the underflow stream is directed as a feed stream into a separation device. Preferably, the second component comprises deaerated liquid or sludge. The separation device is preferably a thickener, clarifier, concentrator or other solid-liquid separator.

According to a second aspect of the invention, there is provided a method for deaerating a feed fluid, the method comprising the steps of conveying said feed fluid into a separating chamber and restricting the fluid flow through an opening of said separating chamber, thereby inducing a rotational flow of said feed fluid in said separating chamber such that said rotational flow generates a centrifugal vortex, said centrifugal vortex separating said feed fluid into a first component substantially comprising froth or gas and a second component substantially comprising deaerated liquid or sludge.

Preferably, said flow restricting step comprises moving a flow restricting device relative to said opening. It is further preferred that said flow restricting step comprises moving said flow restricting device along the rotational axis of said centrifugal vortex.

Preferably, the method further comprises the step of adjusting the size of said opening.

Preferably, the method further comprises the step of controlling the location of the vortex in said separating chamber. More preferably, the controlling step comprises controlling a start point of the vortex. It is further preferred that the controlling step comprises axially displacing the start point of the centrifugal vortex from the opening. In one preferred form, the controlling step comprises moving the flow restricting device to movably locate the centrifugal vortex.

Preferably, the method further comprises the step of controlling the flow of said second component through the opening. More preferably, the flow restricting step comprises controlling the flow of said second component through the opening in response to changes in the volume of feed fluid in said separating chamber. In one preferred form. In one preferred form, the flow controlling step comprises adjusting the flow of said second component through the opening in response to changes in the volume of feed fluid in said separating chamber.

Preferably, the method further comprises the step of dissipating kinetic energy from said second component after it passes through said opening. More preferably, said energy dissipating step comprises discharging said second component into a downstream chamber.

Preferably, the conveying step comprises introducing the feed fluid tangentially to a sidewall of said separating chamber to promote said rotational flow in said separating chamber.

Preferably, the method further comprises the step of discharging the second component tangentially with respect to a sidewall of said downstream chamber.

Preferably, the method further comprises the step of spraying the first component as it leaves said separating chamber to break up air bubbles in the first component.

### Description of the Drawings

Preferred embodiments of the invention will now be described, by way of example only, with reference to the drawings as set out below.
Figure 1 is a perspective view of an apparatus in accordance with one embodiment of the invention.
Figure 2 is a side view of in accordance with another embodiment of the invention.
Figure 3 is a plan view of the apparatus of Fig. 2.
Figure 4 is a perspective view of the apparatus of Fig. 2.
Figure 5 is a plan view of an alternative orifice plate used in the apparatuses of Figures 1 to 4.

### Preferred Embodiments of the Invention

A preferred application of the invention is in the fields of mineral processing, separation and extraction, where finely ground ore is suspended as pulp in a suitable liquid medium such as water at a consistency which permits flow, and settlement in quiescent conditions. Pulp is settled from the suspension by a combination of gravity with chemical and/or mechanical processes.

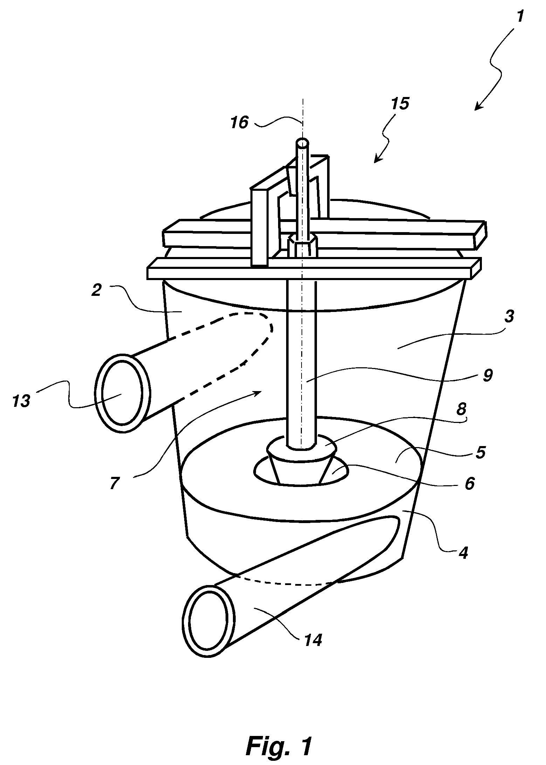

Referring to Figure 1, one embodiment of the invention provides an apparatus 1 for deaerating a feed fluid in the form of a liquid suspension or pulp. The apparatus 1 comprises a frusto-conical tank 2 having a separating chamber in the form of an upper compartment 3, a downstream chamber in the form of a lower compartment 4 and a partition for dividing the tank 2 into the upper compartment 3 and the lower compartment 4. The partition in the form of an orifice plate 5 comprises an opening in form of an orifice 6 for allowing fluid flow from the upper compartment 3 to the lower compartment 4. The apparatus 1 also comprises device for restricting fluid flow through the opening 6 in the form of a valve assembly 7 having a valve in the form of a dart valve 8 that is mounted to a movable shaft 9. The orifice 6 and the valve 8 induce a rotational flow of the feed fluid in the upper compartment 3 such that the rotational flow generates a centrifugal vortex 10 to separate the feed fluid into a first component 11 substantially comprising froth or gas and a second component 12 substantially comprising the deaerated liquid or sludge. In an alternative form, the second component 12 substantially comprises sludge in combination with deaerated liquid.

A feed inlet 13 receives the feed fluid from an upstream process and may be provided with a valve assembly (not shown) to regulate the flow of the feed fluid. In other embodiments, the feed fluid is pumped through the feed inlet 13 into the upper compartment 3 of the apparatus 1. It will be appreciated by one skilled in the art that instead of a feed inlet 13, other types of feed conduit may be used, such as a feed line, channel (open and close) or trough upstream of the apparatus 1.

The froth or gas component 10 leaves the upper compartment 3 as an overflow stream through an upper outlet (not shown), while the deaerated liquid component 11 dissipates its kinetic energy within the lower compartment 4 and is then discharged through an outlet pipe 14. The overflow and underflow streams from the apparatus 1 may be directed into separate downstream processing (not shown).

Turning to the valve assembly 7 in more detail, the opposite end of the shaft 9 is mounted to the top of the tank 2 by way of a mounting assembly 15 that includes a suitable drive mechanism for moving the shaft 9 (and hence the valve 8) along the longitudinal axis of the tank, which coincides with the rotational axis 16 of the vortex 10. Movement of the dart valve 8 relative to the orifice 6 adjusts the size of the orifice 6 by reducing its available cross-sectional area for fluid flow, thus restricting the flow of the deaerated component 11 into the lower compartment 4. This also provides greater control over the generation of the vortex 10 and ensures its stability in the upper compartment 3.

The inventors believe that the dart valve 8 also acts to control the location of the vortex 10 by locating its start point above the orifice plate 5 and its orifice 6. As a consequence, the vortex 10 is axially displaced above the orifice plate 5 and the orifice 6, ensuring that formation of the vortex 10 is controlled and kept confined substantially within the upper compartment 3. This prevents the vortex 10 from extending into the lower compartment 4 and re-aerating the deaerated component 8, thus contaminating the deaerated liquid or sludge. It will be appreciated to one skilled in the art that a separate vortex locating device could be used in addition to the valve assembly 7. For example, a substantially planar disc could be positioned on the shaft 9 above the valve 8 for displacing the vortex 10 from the valve.

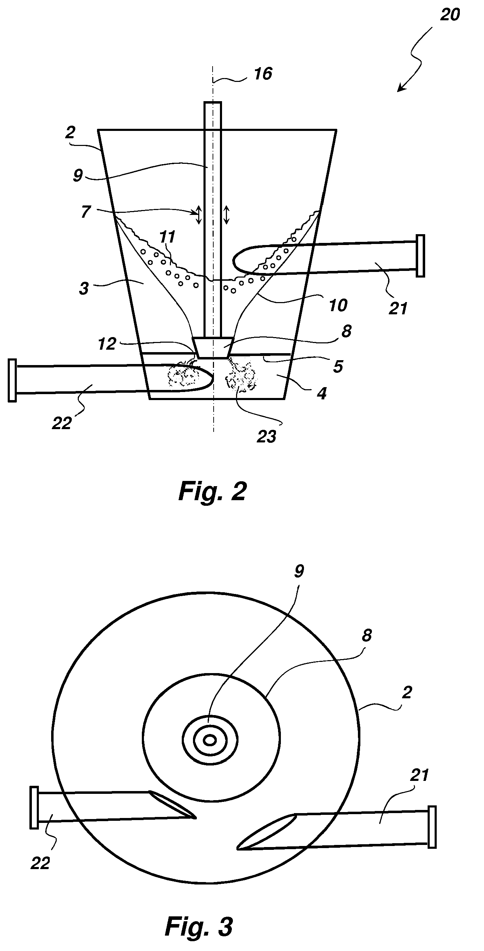

A deaeration apparatus 20 according to a second embodiment of the invention is illustrated in Figures 2 to 4, where corresponding features have been given the same reference numerals. In this embodiment, the apparatus 20 has its feed inlet 21 located approximately in the middle of the upper compartment 3. In addition, the outlet 22 for the deaerated component extends from the tank 2 in the opposite direction to the inlet 21 to conform to the general rotational flow of the deaerated component as it enters the lower compartment 4.

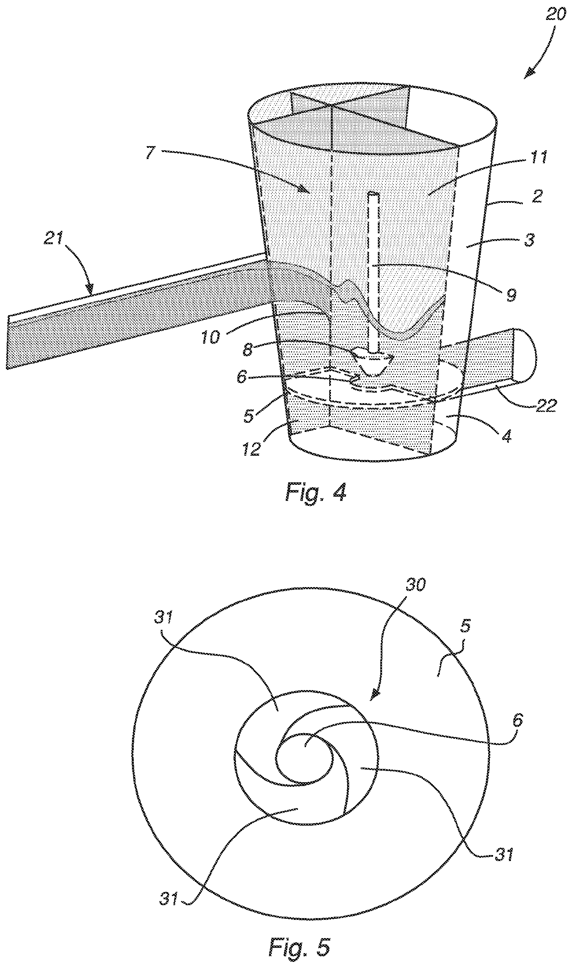

Operation of the deaeration apparatus will now be described with reference to the embodiment of Figures 2 to 4, although it will be appreciated that this description equally applies to the embodiment of Figure 1. Initially, the feed inlet 21 conveys aerated slurry tangentially with respect to a sidewall of the upper compartment 3 so as to promote rotational flow of the feed slurry therein. Also, the valve 8 restricts flow of the aerated slurry through the orifice 6. When a sufficient amount of feed slurry is in the tank, the orifice 6 and valve 8 induce a rotational flow of the feed slurry that develops into the centrifugal vortex 10. The vortex 10 separates the feed slurry into the froth component 11 and the deaerated liquid or sludge component 12, as best shown in Figure 4.

Due to its lighter density, the froth component 11 migrates upwardly in the upper compartment 3 and is removed as an overflow stream. The deaerated liquid or sludge component 12, due to its heavier density, flows through the orifice 6 downwardly into the lower compartment 4, where it dissipates its kinetic energy, primarily as turbulence 23 adjacent the orifice 6 but also within the confines of the lower compartment. The deaerated liquid or sludge component 12 then is allowed to quiesce and discharge through the lower outlet 22 as an underflow stream.

The inventors note that the orifice 6 effectively reduces the radius of the vortex 10. This increases the amount of swirl or revolutions per minute (rpm) of the vortex 10, similar in manner to a hydro cyclone. Thus, there is an increase in the efficiency in separating the feed slurry into the respective froth component 11 and deaerated component 12.

The drive mechanism and the shaft 9 also move the dart valve 8 to any desired position relative to the orifice 6. This has two effects. Firstly, the movement of the valve 8 towards and away from the orifice 6 adjusts the effective size of the orifice, thus controlling the parameters of the vortex 10, including its size and swirl. That is, by restricting the fluid flow through the orifice 6, the valve 8 increases the amount of swirl at the centre of the vortex 10, inhibiting the movement of froth component 10 towards the orifice 6 and the lower compartment 4.

Secondly, adjusting the effective size of the orifice 6 via the valve 8 permits control over the volume of the deaerated component 12 flowing to the lower compartment 4. This enables the deaeration apparatus 1 to respond to changes in the volumetric flow of the feed slurry by varying the size of the orifice 6, and hence the flow of the deaerated component 12 to the lower compartment 4. For example, if there is an increase in the flow of the incoming feed slurry by 140%, the apparatus 1 can compensate for this increase by increasing the distance of the valve 8 from the orifice 6, effectively increasing the size of the orifice by, say, 120%.

In the preferred embodiment, the orifice plate 5 is substantially horizontal with respect to the tank so that the orifice 6 is arranged substantially perpendicular to the rotational axis 16 of the vortex 10, thus maximising the volume of the centrifugal vortex in the upper compartment 3. However, it will be appreciated that the orifice plate need not be horizontal so long as the orifice 6 is substantially perpendicular to the rotational axis 16 of the vortex 10.

It has been discovered that the deaeration apparatus 1, 20 is particularly efficient in separating froth from partially aerated pulps by centrifugal forces and/or "shearing" to remove the air bubbles from the solid particles. The proportion of deaeration of the feed liquid can be controlled as appropriate by varying several operating parameters of the deaeration apparatus 1, including the respective diameters of the upper and lower compartments, the apparatus length, the size of the feed conduit, the feed density, throughput of feed liquid into the separator and the size of the orifice. With a partially aerated feed liquid, and appropriately tuned operating parameters, a relatively small overflow stream can be produced with the apparatus 1, 20 which contains the vast majority of the froth, leaving a proportionately large volume of deaerated underflow liquid having a density similar to that of the feed liquid.

In the preferred embodiments of the invention, the deaeration apparatus 1 has a substantially conical shape for encouraging rotational flow of the feed slurry in the upper compartment 3 and maximising the effective volume that is subjected to the vortex 10, thus maximising the separation of the feed slurry into the froth and deaerated components. In other words, ideally the upper compartment 3 should at least have a shape that substantially conforms or corresponds to the shape of the vortex 10. However, it is possible to implement the invention using other cross-sectional shapes for the upper compartment 3, including partly circular or partly conical shapes.

Similarly, the lower compartment 4 in the preferred embodiments of the invention has a smaller volume than the volume of the upper compartment 3 in order to minimise sanding of the lower compartment. Typically, the cross-sectional shape of the lower compartment will be the same as the cross-sectional shape of the upper compartment for convenience. However, it is possible to implement the invention using other cross-sectional shapes for the lower compartment, including partly circular or partly conical shapes. For example, the lower compartment could have a flared shape, if desired.

Referring to Figure 5, an alternative form of the orifice plate 5 is illustrated. In this embodiment, the orifice 30 is defined by a series of moveable plates 21 that collectively act like an iris to open and close the orifice 6. In this manner, the size of the orifice 6 can be adjusted to control the vortex 10 as well as restrict flow of the deaerated component 12 to the lower compartment. In another embodiment of the invention, the opening is annular in shape, essentially duplicating the general form of the annular shape orifice 6 when its size is adjusted by the use of the valve 13.

In the preferred embodiments of the invention, the underflow stream from the lower outlet 10, 22 feeds the deaerated liquid or sludge from the apparatus 1, 20 to a thickener (not shown). This obviates the problem of accumulation of excess froth in the thickener and the associated feedwell, which in prior art devices significantly reduces the efficiency of the thickening process. The overflow stream from the upper compartment 3 can be fed to a chimney (now shown) at the top of the tank 2, where it can be broken down with fine water spray jets from a spraying apparatus (not shown). Alternatively, the overflow stream can be fed to a launder and again broken down by a spraying apparatus (not shown). The resultant mixture of liquid from the spray jets with the liquid from the collapsed froth can be added to the underflow deaerated liquid downstream of the apparatus 1 and thence fed to the thickener. Alternatively, the mixture can be recycled to the feed slurry upstream of the deaeration apparatus 1.

In other preferred forms of the invention, the apparatus 1, 20 may omit the lower compartment 4 entirely, and the orifice 6 simply functions as an outlet for the deaerated component 12 into a feed conduit that leads directly to a separation device, such as the feedwell of a thickener, or other downstream processing unit.

Whilst a single deaeration apparatus is illustrated in the preferred embodiments, it will be appreciated that a plurality of deaeration apparatuses connected in series, parallel or a combination of both, may also be used depending upon the throughput, the degree of separation required, and other variables. However, it is preferred that the deaeration apparatus is upscaled in capacity to meet the required throughput of feed fluid that needs to be processed.

Of course, the deaeration apparatus of the invention need not necessarily be applied only to thickeners, since the principle of deaeration performed by the deaeration apparatuses may be used in numerous other applications. There is also no specific requirement to recombine the overflow from the deaeration apparatus with the underflow or with the feed material. The separated streams may simply be directed to discrete downstream process units as required.

It will also be appreciated by one skilled in the art that the invention provides a useful apparatus for deaerating fluids, especially liquid suspensions or pulps, thus reducing or substantially eliminating the harmful effects of froth in the subsequent separation processes conducted downstream of the deaeration apparatus.

Moreover, the illustrated deaeration apparatuses according to embodiments of the invention avoid the design problems with prior art break tanks. That is, the deaeration apparatuses according to embodiments of the invention are able to deaerate feed slurry and reduce the kinetic energy of the feed slurry prior to its entry into the thickener, without the risks of sanding and reintroducing air into the feed slurry. Accordingly, there is an improvement in the production efficiency in separation devices employing such apparatuses. In all these respects, the invention represents a practical and commercially significant improvement over the prior art.

## Claims

1. An apparatus (1) for deaerating a feed fluid, said apparatus comprising:
a chamber (3) for separating said feed fluid into a first component (11) substantially comprising froth or gas and a second component (12) substantially comprising deaerated liquid or sludge;
an opening (6, 30) for fluid flow from said separating chamber (3);
a device (7) for restricting fluid flow through said opening, said flow restricting device comprising a valve (8) mounted to a movable shaft (9) for moving said valve;
wherein said opening and said flow restricting device induce a rotational flow of said feed fluid in said separating chamber such that said rotational flow generates a centrifugal vortex (10) to separate said feed fluid into said first component and said second component;
the apparatus further comprising a feed inlet (13, 21) for feeding said feed fluid into said separating chamber (3), said inlet being arranged to introduce the feed fluid tangentially to a sidewall of the separating chamber to promote said rotational flow in said separating chamber; and
a chamber (4) downstream of said separating chamber for receiving said second component (12), said downstream chamber being configured to dissipate kinetic energy from said second component;
wherein said separating chamber comprises an upper compartment (3) of a tank (2) and said downstream chamber comprises a lower compartment (4) of said tank, said tank further comprising a partition (5) for dividing said tank into said upper compartment and said lower compartment, wherein said opening (6, 30) is formed in said partition.

2. The apparatus of claim 1, wherein said movable shaft (9) moves said valve (8) relative to said opening (6), preferably along the rotational axis (16) of said centrifugal vortex (10).

3. The apparatus of claim 1 or 2, further comprising a device for adjusting the size of said opening to restrict the flow of said second component through the opening, preferably comprising a plurality of moveable plates (31) for adjusting the size of said opening (30).

4. The apparatus of any one of the preceding claims, wherein the flow restricting device (7) is movable to control the flow of said second component (12) through the opening in response to changes in the volume of feed fluid in said separating chamber (3).

5. The apparatus of any one of the preceding claims, wherein the opening (6, 30) is located in a plane substantially perpendicular to the rotational axis (16) of the centrifugal vortex (10).

6. The apparatus of any one of the preceding claims, wherein the downstream chamber (4) has a circular cross-section for encouraging flow of said second component (12) through an outlet (14, 22) of said tank, said outlet being arranged so that said second component discharges from the downstream chamber tangentially with respect to a sidewall of the downstream chamber.

7. The apparatus of claim 6, wherein said downstream chamber (4) has a volume less than the volume of said separating chamber (3) to minimise sanding in said downstream chamber.

8. The apparatus of any one of the preceding claims, wherein the first component (11) leaves the apparatus as an overflow stream, said separating chamber comprising an outlet (14, 22) for the first component, and the second component (12) leaves the apparatus (1) as an underflow stream, said underflow stream being directed as a feed stream into a separation device, said separation device being at least one of a thickener, clarifier, concentrator or other solid-liquid separator.

9. A method for deaerating a feed fluid using the apparatus of any one of the preceding claims, said method comprising the steps of conveying said feed fluid into a separating chamber (3) and restricting the fluid flow through an opening (6, 30) of said separating chamber using said flow restricting device (7), thereby inducing a rotational flow of said feed fluid in said separating chamber such that said rotational flow generates a centrifugal vortex (10), said centrifugal vortex separating said feed fluid into a first component (11) substantially comprising froth or gas and a second component substantially comprising deaerated liquid or sludge (12).

10. The method of claim 9, wherein said flow restricting step comprises moving said valve (8) relative to said opening (6, 30).

11. The method of claim 10, wherein said flow restricting step comprises moving said valve (8) along the rotational axis (16) of said centrifugal vortex (10).

12. The method of claim 10 or 11, wherein said movement of said valve (8) axially displaces a start point of said centrifugal vortex (10) from said opening (6, 30).

13. The method of any one of claims 9 to 12, further comprising the step of adjusting the size of said opening (30).

14. The method of claim any one of claims 9 to 13, further comprising the step of controlling the flow of said second component (12) through the opening (6, 30) in response to changes in the volume of feed fluid in said separating chamber (3).

## Patentansprüche

1. Apparatur (1) zum Entlüften eines Zufuhr-Fluids, welche Apparatur aufweist:
eine Kammer (3) zum Separieren des besagten Zufuhr-Fluids in einen ersten Bestandteil (11), der im Wesentlichen Schaum oder Gas aufweist, und einen zweiten Bestandteil (12), der im Wesentlichen entlüftete Flüssigkeit oder eine Aufschlämmung aufweist;
eine Öffnung (6, 30) für einen Fluidstrom von der besagten Separationskammer (3);
eine Vorrichtung (7) zum Restriktieren einer Fluidströmung durch die besagte Öffnung, wobei die besagte Restriktionsvorrichtung ein Ventil (8) aufweist, das an einem beweglichen Schaft (9) zum Bewegen des Ventils montiert ist;
wobei die Öffnung und die Strömungs-Restriktionsvorrichtung eine rotierende Strömung des Zufuhr-Fluids in der Separationskammer erzeugen, derart, dass die rotierende Strömung einen zentrifugalen Wirbel (10) generiert, um das Zufuhr-Fluid in den ersten Bestandteil und den zweiten Bestandteil zu separieren;
die Apparatur ferner einen Zufuhr-Einlass (13, 21) zum Zuführen des Zufuhr-Fluids in die Separationskammer (3) aufweist, wobei der Einlass dazu angeordnet ist, das Zufuhr-Fluid tangential an eine Seitenwand der Separationskammer einzuführen, um die besagte rotierende Strömung in der Separationskammer zu unterstützen; und
eine Kammer (4) stromabwärts der Separationskammer zum Aufnehmen des zweiten Bestandteils (2), wobei die stromabwärtige Kammer dazu konfiguriert ist, kinetische Energie von dem zweiten Bestandteil zu dissipieren;
wobei die Separationskammer ein oberes Abteil (3) eines Tanks (2) aufweist und die stromabwärtige Kammer ein unteres Abteil (4) des Tanks aufweist, welcher Tank ferner eine Trennwand (5) zum Unterteilen des Tanks in das obere Abteil und das besagte untere Abteil aufweist, wobei die besagte Öffnung (6, 30) in der Trennwand ausgebildet ist.

2. Apparatur nach Anspruch 1, wobei der bewegliche Schaft (9) das Ventil (8) relativ zur besagten Öffnung (6) bewegt, vorzugsweise entlang der Rotationsachse (16) des zentrifugalen Wirbels (10).

3. Apparatur nach Anspruch 1 oder 2, ferner aufweisend eine Vorrichtung zum Einstellen der Größe der Öffnung zur Restriktion der Strömung des zweiten Bestandteiles durch die Öffnung, vorzugsweise aufweisend eine Mehrzahl an bewegbaren Platten (31) zum Einstellen der Größe der Öffnung (30).

4. Apparatur nach einem der vorangehenden Ansprüche, wobei die Strömungs-Restriktionsvorrichtung (7) bewegbar ist, um die Strömung des zweiten Bestandteils (12) durch die Öffnung in Antwort auf Änderungen in dem Volumen des Zufuhr-Fluids in der Separationskammer (3) zu steuern.

5. Apparatur nach einem der vorangehenden Ansprüche, wobei die Öffnung (6, 30) in einer Ebene platziert ist, die im Wesentlichen senkrecht auf die Rotationsachse (16) des zentrifugalen Wirbels (10) steht.

6. Apparatur nach einem der vorangehenden Ansprüche, wobei die stromabwärtige Kammer (4) einen kreisförmigen Querschnitt hat, um eine Strömung des zweiten Bestandteils (12) durch ein Auslass (14, 22) des Tanks zu veranlassen, wobei der Auslass so angeordnet ist, dass der zweite Bestandteil von der stromabwärtigen Kammer tangential bezüglich einer Seitenwand der stromabwärtigen Kammer abgegeben wird.

7. Apparatur nach Anspruch 6, wobei die stromabwärtige Kammer (4) ein Volumen hat, das kleiner ist als das Volumen der Separationskammer (3), um eine Versandung in der stromabwärtigen Kammer zu minimieren.

8. Apparatur nach einem der vorangehenden Ansprüche, wobei der erste Bestandteil (11) die Apparatur als ein Überlaufstrom verlässt, wobei die Separationskammer einen Auslass (14, 22) für den ersten Bestandteil aufweist, und der zweite Bestandteil (12) die Apparatur als ein Unterstrom verlässt, wobei der Unterstrom als ein Zufuhrstrom in eine Separationsvorrichtung gerichtet ist, welche Separationsvorrichtung zumindest entweder ein Eindicker, ein Klärbecken, ein Konzentrator oder ein anderer Feststoff-Flüssigkeits-Separator ist.

9. Verfahren zum Entlüften eines Zufuhr-Fluides unter Verwendung der Apparatur nach einem der vorangehenden Ansprüche, welches Verfahren die Schritte eines Zuführens des Zufuhr-Fluids in eine Separationskammer sowie ein Restriktieren der Fluid-Strömung durch eine Öffnung (6, 30) der Separationskammer unter Verwendung der besagten Strömungs-Restriktionsvorrichtung (7) aufweist, wodurch eine rotierende Strömung des Zufuhr-Fluids in der Separationskammer hervorgerufen wird, derart, dass die rotierende Strömung einen zentrifugalen Wirbel (10) generiert, welcher zentrifugale Wirbel das Zufuhr-Fluid in einen ersten Bestandteil (11), der im Wesentlichen Schaum oder Gas aufweist, und einen zweiten Bestandteil separiert, der im Wesentlichen entlüftete Flüssigkeit oder eine Aufschlämmung (12) aufweist.

10. Verfahren nach Anspruch 9, wobei der Strömungs-Restriktions-Schritt ein Bewegen des Ventils (8) relativ zur besagten Öffnung (6, 30) umfasst.

11. Verfahren nach Anspruch 10, wobei der Strömungs-Restriktions-Schritt ein Bewegen des Ventils (8) entlang der Rotationsachse (16) des zentrifugalen Wirbels (10) umfasst.

12. Verfahren nach Anspruch 10 oder 11, wobei die Bewegung des Ventils (8) einen Startpunkt des zentrifugalen Wirbels (10) von der Öffnung (6, 30) axial versetzt.

13. Verfahren nach einem der Ansprüche 9 - 12, ferner aufweisend den Schritt eines Einstellens der Größe der Öffnung (30).

14. Verfahren nach einem der Ansprüche 9 - 13, ferner aufweisend den Schritt einer Steuerung der Strömung des zweiten Bestandteils (12) durch die Öffnung (6, 30) in Antwort auf Veränderungen in dem Volumen des Zufuhr-Fluids in der Separationskammer (3).

## Revendications

1. Dispositif (1) destiné à désaérer un fluide d'alimentation, ledit dispositif comprenant :
une chambre (3) destinée à séparer ledit fluide d'alimentation en un premier composant (11) comprenant sensiblement de la mousse ou du gaz et un second composant (12) comprenant sensiblement du liquide ou
de la boue désaéré(e) ;
un orifice (6, 30) pour l'écoulement de fluide à partir de ladite chambre de séparation (3) ;
un appareil (7) destiné à restreindre l'écoulement de fluide à travers ledit orifice, ledit appareil de restriction d'écoulement comprenant une soupape (8) montée sur une tige mobile (9) pour déplacer ladite soupape ;
dans lequel ledit orifice et ledit appareil de restriction d'écoulement induisent un écoulement rotatif dudit fluide d'alimentation dans ladite chambre de séparation de telle sorte que ledit écoulement rotatif génère un vortex centrifuge (10) pour séparer ledit fluide d'alimentation dans ledit premier composant et ledit second composant ;
le dispositif comprenant en outre
une entrée d'alimentation (13, 21) destinée à alimenter ledit fluide d'alimentation dans ladite chambre de séparation (3), ladite entrée étant agencée pour introduire le fluide d'alimentation de manière tangentielle à une paroi latérale de la chambre de séparation afin de promouvoir ledit écoulement rotatif dans ladite chambre de séparation ; et
une chambre (4) en aval de ladite chambre de séparation pour recevoir ledit second composant (12), ladite chambre en aval étant configurée pour dissiper l'énergie cinétique provenant dudit second composant ;
dans lequel ladite chambre de séparation comprend un compartiment supérieur (3) d'un réservoir (2) et ladite chambre en aval comprend un compartiment inférieur (4) dudit réservoir, ledit réservoir comprenant en outre une cloison (5) destinée à diviser ledit réservoir dans ledit compartiment supérieur et ledit compartiment inférieur, dans lequel ledit orifice (6, 30) est formé dans ladite cloison.

2. Dispositif selon la revendication 1, dans lequel ladite tige mobile (9) déplace ladite soupape (8) par rapport audit orifice (6), de préférence le long de l'axe de rotation (16) dudit vortex centrifuge (10).

3. Dispositif selon la revendication 1 ou 2, comprenant en outre un appareil destiné à ajuster la taille dudit orifice afin de restreindre l'écoulement dudit second composant à travers l'orifice, comprenant de préférence une pluralité de plateaux mobiles (31) destinés à ajuster la taille dudit orifice (30).

4. Dispositif selon une quelconque des revendications précédentes, dans lequel l'appareil de restriction d'écoulement (7) est mobile pour commander l'écoulement dudit second composant (12) à travers l'orifice en réponse à des changements de volume du fluide d'alimentation dans ladite chambre de séparation (3).

5. Dispositif selon une quelconque des revendications précédentes, dans lequel l'orifice (6, 30) est situé dans un plan sensiblement perpendiculaire à l'axe de rotation (16) du vortex centrifuge (10).

6. Dispositif selon une quelconque des revendications précédentes, dans lequel la chambre en aval (4) présente une section transversale circulaire destinée à encourager l'écoulement dudit second composant (12) à travers une sortie (14, 22) dudit réservoir, ladite sortie étant agencée de sorte que ledit second composant s'évacue de la chambre en aval de manière tangentielle par rapport à la paroi latérale de la chambre en aval.

7. Dispositif selon la revendication 6, dans lequel ladite chambre en aval (4) présente un volume inférieur au volume de ladite chambre de séparation (3) afin de minimiser le sablage dans ladite chambre en aval.

8. Dispositif selon une quelconque des revendications précédentes, dans lequel le premier composant (11) sort du dispositif sous la forme d'un flux de débordement, ladite chambre de séparation comprenant une sortie (14, 22) pour le premier composant, et le second composant (12) sort du dispositif (1) sous la forme d'un flux de sous-écoulement, ledit premier composant étant dirigé sous la forme d'un flux d'alimentation dans un appareil de séparation, ledit appareil de séparation étant au moins un appareil parmi un épaississeur, un clarificateur, un concentrateur ou tout autre séparateur solide-liquide.

9. Procédé destiné à désaérer un fluide d'alimentation en utilisant le dispositif selon une quelconque des revendications précédentes, ledit procédé comprenant les étapes consistant à alimenter ledit fluide d'alimentation dans une chambre de séparation (3) et à restreindre l'écoulement de fluide à travers un orifice (6, 30) de ladite chambre de séparation en utilisant ledit appareil de restriction d'écoulement (7), en induisant ainsi un écoulement rotatif dudit fluide d'alimentation dans ladite chambre de séparation de telle sorte que ledit écoulement rotatif génère un vortex centrifuge (10), ledit vortex centrifuge séparant ledit fluide d'alimentation en un premier composant (11) comprenant sensiblement de la mousse ou du gaz et un second composant comprenant sensiblement du liquide ou de la boue désaéré(e) (12).

10. Procédé selon la revendication 9, dans lequel ladite étape de restriction d'écoulement comprend le déplacement de ladite soupape (8) par rapport à ladite audit orifice (6, 30).

11. Procédé selon la revendication 10, dans lequel ladite étape de restriction d'écoulement comprend le déplacement de ladite soupape (8) le long de l'axe de rotation (16) dudit vortex centrifuge (10).

12. Procédé selon la revendication 10 ou 11, dans lequel ledit déplacement de ladite soupape (8) déplace axialement un point de départ dudit vortex centrifuge (10) par rapport audit orifice (6, 30).

13. Procédé selon une quelconque des revendications 9 à 12, comprenant en outre l'étape consistant à ajuster la taille dudit orifice (30).

14. Procédé selon une quelconque des revendications 9 à 13, comprenant en outre l'étape consistant à commander l'écoulement dudit second composant (12) à travers l'orifice (6, 30) en réponse à des changements de volume du fluide d'alimentation dans ladite chambre de séparation (3).
